# EUROPEAN PATENT SPECIFICATION

(11) **EP 3 907 421 B1**
(45) Date of publication and mention of the grant of the patent: **12.02.2025**
(21) Application number: 21171340.9
(22) Date of filing: 29.04.2021
(51) Int. Cl.: F16L 11/08, F16L 11/112

(54) **MULTILAYER TUBE**
MEHRSCHICHTIGER SCHLAUCH
TUBE MULTICOUCHE

(30) Priority: 07.05.2020 IT 202000010177
(43) Date of publication of application: 10.11.2021
(73) Proprietor: Tubigomma Deregibus S.r.l., 35030 Saccolongo (PD) (IT); FLUOR TUBING B.V., 3542 CH Utrecht (NL)
(72) Inventor: SOETERBROEK, Alexander J.A, 3735LA Bosch en Duin (NL); DEREGIBUS, Andrea, 35142 Padova (IT)
(74) Representative: Modiano, Micaela Nadia

(56) References cited:
- DE-U- 1 965 010
- GB-A- 1 226 670
- US-A- 3 047 026
- US-A- 4 013 101
- US-A- 4 196 031
- US-A1- 2001 030 054

## Description

The present invention relates to a multilayer tube.

This multilayer tube finds application in many and varied sectors, such as the food sector, the chemical sector, the pharmaceutical sector and the cosmetics sector.

Its structure is constituted by an inner layer, typically a tubular sheath which defines the passage duct of the fluid, and one or more outer layers overlaid on the inner layer and integrated with it.

The inner layer is made of fluorinated polymers, such as FEP, MFA, PFA, PVDF, ECTFE and PTFE and, in particular in the chemical/pharmaceutical industry, is preferably transparent or white. Alternatively it can be black or with one or more black stripes, optionally also conductive, or another chosen color.

In general, the outer layers can comprise textile reinforcements, elastomers and metallic or thermoplastic helices for reinforcement and protection which are adapted to improve flexibility and limit the risk of the tube collapsing during its bending.

Among the tubes that are widespread in the above mentioned sectors, there are tubes with a corrugated sheath on the inner layer, which is undulating in a helical pattern so as to define troughs on the bottom of which a helix is positioned, typically metallic, in order to confer a level of flexibility greater than that conferred on the tube by a smooth inner layer, like the tube described and shown in US7216675B2, in the name of Crane Resistoflex. Another tube is described in US3047026A.

The ends of these tubes need to be connected to the system and to the ends of other tubes using connectors. Normally the installation technician has to cut the tube to the size for use, and the connector is typically inserted in the inner layer. Since the connector is smooth and the inner layer has undulations, in order to make the surfaces of the two elements adhere, while preventing the leakage of the fluid under pressure, the tube is clamped at the inserted connector in order to compress it thereon. Externally, a metallic ring or a band clamp is associated with and tightened on the two, to maintain the compression. The use of a ferrule or of a metallic collar or of a pair of half-shells in place of the clamp is also widespread.

This solution does not fully solve the problem of the leakage of fluid: the metallic helix, after the clamping of the tube, can cut the sheath of the inner layer, thus worsening the problem instead of solving it.

Currently leaks are avoided by not excessively clamping the tube, in order not to incur the risk of cutting the sheath, but this then requires limiting of the operating pressures.

Alternatively, the smooth connector can be mounted outside the sheath of the inner layer. In such case, the installation technician has to remove the covering outer layer and the helix at the end to be connected, for a length suitable for the connector that it is desired to install. Subsequently, an overlay in rubber needs to be provided on the end with the connector coupled.

The operation to remove the outer layer and provide the overlay is often laborious and requires skill on the part of the operator.

The aim of the present invention is to provide a multilayer tube which is capable of improving the known art in one or more of the above mentioned aspects.

Within this aim, an object of the invention is to provide a multilayer tube by virtue of which it is possible to apply connectors in a known manner and without incurring the risk of leaks of fluid passing through the tube.

Another object of the invention is to provide a multilayer tube by virtue of which it is possible to clamp the tube, during coupling with a connector, without incurring the risk of cutting the sheath of the innermost layer.

Another object of the invention is to provide a multilayer tube with which, after coupling with a connector, it is not necessary to lower the operating pressures.

Another object of the invention is to prevent, during bending of the tube, the helix positioned between the troughs, which could move during such bending, from placing a strain on the sheath of the inner layer.

A further object of the present invention is to overcome the drawbacks of the background art in a manner that is alternative to any existing solutions.

Another object of the invention is to provide a multilayer tube that is highly reliable, easy to implement and of low cost.

This aim and these and other objects which will become better apparent hereinafter are achieved by a multilayer tube which is characterized in that it comprises, in succession from the inside outward:
- an inner layer constituted by a tubular sheath which defines a passage duct for a fluid and is corrugated at least externally, thus defining troughs,
- a protective layer for said inner layer and which follows its corrugated shape,
- a helix wound on said protective layer and positioned on a bottom of said troughs,
- an outer layer, in which said helix is embedded.

The invention is defined in independent claim 1. Advantageous features are defined in the dependent claims.

Further characteristics and advantages of the invention will become better apparent from the description of a preferred, but not exclusive, embodiment of the multilayer tube according to the invention, which is illustrated by way of non-limiting example in the accompanying drawings wherein:
- Figure 1 is a perspective view of the multilayer tube according to the invention;
- Figure 2 is a longitudinal cross-sectional view of the multilayer tube according to the invention.

With reference to the figures, the multilayer tube according to the invention, generally designated by the reference numeral 10, comprises, in succession from the inside outward:
- an inner layer 11 constituted by a tubular sheath which defines the passage duct for a fluid and is corrugated at least externally, thus defining troughs,
- a protective layer 12 for the inner layer 11 and which follows its corrugated shape,
- a helix 14 wound on the protective layer 12 and positioned on the bottom of the troughs,
- an outer layer 15, in which the helix 14 is embedded.

The inner layer 11 is constituted by a fluorinated polymer, preferably PTFE or in any case selected from PTFE, FPE, PFA, PVDF, ECTFE, MFA.

The tubular sheath that constitutes the inner layer 11 is corrugated in a screw, or helically convoluted, both outside and inside, in order to facilitate the flexibility of the tube. The corrugation, or convolution, derives from ridges with a helical extension. Substantially it is a special form of wide helical wave which, in addition to conferring flexibility, eliminates potential areas that would obstruct the fluid and accelerates the flow thereof.

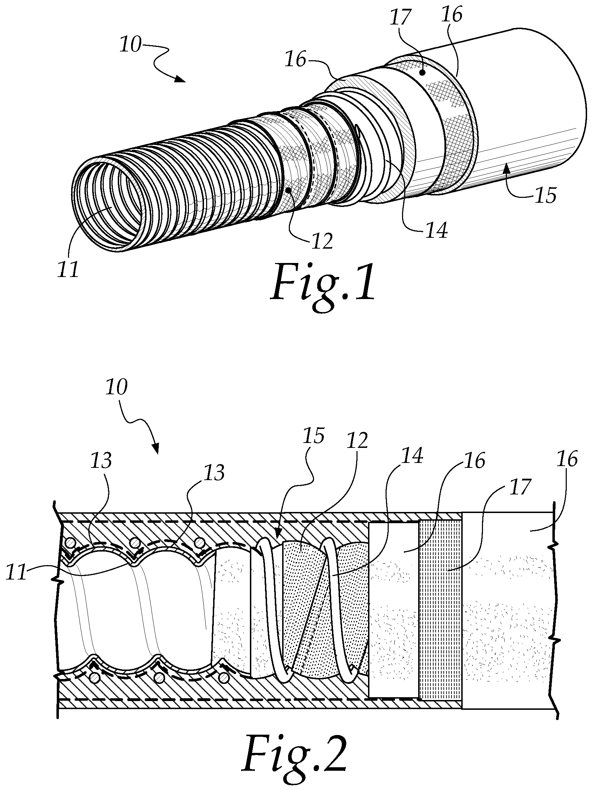

The protective layer 12 substantially duplicates the shape of the inner layer 11, defining helical ridges, which are indicated with 13 in Figure 2, outside it as well.

Such protective layer 12 is adapted to withstand at least the tensions induced by a compression of the tube from outside and the penetration of the helix 14 when, once a connector is inserted into the tube at a free end thereof, the tube is clamped in order to favor its coupling with the connector. The protective layer 12 prevents contact of the helix 14 with the inner layer 11.

In order to carry out its function, the protective layer 12 is constituted by a rubberized fabric band, which is resistant to high temperatures and is wound onto the inner layer 11 in the reverse direction with respect to subsequent windings, which define the outer layer 15, and with the edges overlapping slightly, according to a winding technique that is per se known in the sector.

As an alternative, this protective layer 12 can be constituted by a band made of rubberized non-woven fabric and wound onto the inner layer 11, or it can be constituted by a rubberized filament wound onto the inner layer 11, or by a filament wound onto the inner layer and then covered with plastic material and vulcanized. Or, as another alternative, it can be constituted by a band made of continuous rubberized material wound onto the inner layer 11.

Rubberized bands and filaments are per se known and can be provided, according to methods of calendering that are known per se, by making the band or the filament pass through a calendering unit on which the frictioning material is deposited in the plastic state, preferably an elastomeric material, adapted to provide the rubberizing and at suitable temperatures as a function of the materials.

The band (or the filament) with which the protective layer 12 is provided is constituted by a material chosen, preferably, from among nylon, polyester, polyvinyl acetate, aramid, cotton, rayon, glass, or a mesh made of metallic materials.

In the provision of the multilayer tube, the bands are wound in the reverse direction with respect to the winding of the helix 14. The band wound around the inner layer 11 does not follow the shape of the troughs between the ridges of the inner layer 11. Subsequently, this band after being wound is pushed into the troughs with the winding thereupon of the helix 14. If the protective layer is constituted by filament, this is wound in the same direction as the subsequent winding of the helix 14.

The helix 14 is preferably a filament made of metallic or thermoplastic material and is wound in a helix onto the protective layer 12, on the bottom of the troughs between the helical ridges 13. It renders the tube more resistant to bending, thus preventing it from collapsing.

The outer layer 15 comprises in its turn at least one layer made of elastomeric material 16 and at least one textile reinforcement layer 17, alternating in its thickness. The textile reinforcement layers 17 are also adapted to improve the resistance of the tube to bending and to limit the risk of its collapsing during its bending (in addition to enabling a higher operating pressure at which to use the tube according to the invention).

In the example shown, there are two layers of elastomeric material 16 alternated with one textile reinforcement layer 17. The latter can be constituted by a combination of single filaments, fabrics or reinforcement meshes made of webbing. These are wound helically onto at least one winding of a layer of elastomeric material 16, with overlapping areas of the edges in the case of the webbing. On the textile reinforcement layer 17, another layer is wound which is made of elastomeric material 16, and a subsequent step of autoclave vulcanization makes it possible to obtain an outer layer 15 in a single piece, where the textile layer 17 is incorporated in the structure of the tube.

The use of the multilayer tube according to the invention is the following.

During the installation step of the tubes, the operator inserts a connector into the tube, at a free end of the latter, the tube is then clamped from outside on the connector until the surfaces of the two elements, one corrugated and the other smooth, are made to adhere, so as to completely prevent the leakage of fluid under pressure. A band clamp (or a ferrule or a metallic collar or a pair of half-shells) is tightened on the two elements, in the clamping zone.

During the clamping of the tube, the protective layer 12 resists penetration of the helix, preventing it from reaching the inner layer 11 and cutting it.

The same protective layer 12 also resists the tensions induced by the compression and by the band clamp (or by the ferrule or by the collar or by the half-shells).

It should also be noted that during bending of the tube the helix, by moving, is not capable of placing a strain on the inner layer of the structure, by virtue of the protective layer which prevents direct contact between the two.

In practice it has been found that the invention fully achieves the intended aim and objects by providing a multilayer tube that lends itself to being clamped during the joining of a connector to an extent that is such as to prevent leaks in the clamping area of the fluid that passes through the tube and without the clamping operation leading to the penetration of the inner layer of the structure by the helix.

In practice the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A multilayer tube, comprising in succession from inside outward:
- an inner layer (11) constituted by a tubular sheath which defines a passage duct for a fluid and is corrugated at least externally, thus defining troughs,
- a protective layer (12) for said inner layer (11) and which follows its corrugated shape, the protective layer being made of a rubberized band or filament wound onto said inner layer (11),
- a helix (14) wound on said protective layer (12) and positioned on a bottom of said troughs,
- an outer layer (15), in which said helix (14) is embedded;
- said outer layer (15) comprising at least one layer made of elastomeric material (16) and at least one textile reinforcement layer (17), alternating in its thickness, said at least one layer made of elastomeric material (16) being arranged completely over the protective layer (12) and the helix (14) and being straight, thus defining a cylindrical tube.

2. The multilayer tube according to claim 1, **characterized in that** said protective layer (12) is constituted by a rubberized fabric band wound onto said inner layer (11).

3. The multilayer tube according to claim 1, **characterized in that** said protective layer (12) is constituted by a band made of rubberized non-woven fabric wound onto said inner layer (11).

4. The multilayer tube according to one or more of the preceding claims, **characterized in that** said band of said protective layer (12) is wound onto said inner layer (11) in a reverse direction with respect to subsequent windings which define said outer layer (15).

5. The multilayer tube according to one or more of the preceding claims, **characterized in that** said protective layer (12) is constituted by a rubberized filament wound onto said inner layer (11).

6. The multilayer tube according to one or more of the preceding claims, **characterized in that** said protective layer (12) is constituted by a band made of continuous rubberized material wound onto said inner layer (11).

7. The multilayer tube according to one or more of the preceding claims, **characterized in that** said inner layer (11) is constituted by a fluorinated polymer.

## Patentansprüche

1. Ein mehrschichtiger Schlauch, der hintereinander, von innen nach außen, Folgendes umfasst:
- eine innere Schicht (11), bestehend aus einer schlauchförmigen Hülse, die einen Durchlasskanal für ein Fluid bestimmt und zumindest außen gerippt ist, wodurch sie Vertiefungen bestimmt,
- eine Schutzschicht (12) für die innere Schicht (11), die deren gerippten Form folgt, wobei die Schutzschicht aus einem gummierten Band oder Faden besteht, das/der auf die innere Schicht (11) gewickelt ist,
- eine Spirale (14), auf die Schutzschicht (12) gewickelt und auf einen Boden der Vertiefungen platziert,
- eine äußere Schicht (15), in welche die Spirale (14) eingebettet ist,
- wobei die äußere Schicht (15) mindestens eine Schicht aus Elastomermaterial (16) und mindestens eine textile Verstärkungsschicht (17), alternierend in ihrer Dicke, umfasst, wobei die mindestens eine Schicht aus Elastomermaterial (16) vollständig über der Schutzschicht (12) und der Spirale (14) angeordnet sowie gerade ist und somit einen zylindrischen Schlauch bestimmt.

2. Der mehrschichtige Schlauch gemäß Anspruch 1, **dadurch gekennzeichnet, dass** die Schutzschicht (12) aus einem gummierten Textilband besteht, das um die innere Schicht (11) gewickelt ist.

3. Der mehrschichtige Schlauch gemäß Anspruch 1, **dadurch gekennzeichnet, dass** die Schutzschicht (12) aus einem Band aus gummiertem Vliesstoff besteht, das um die innere Schicht (11) gewickelt ist**.**

4. Der mehrschichtige Schlauch gemäß einem oder mehreren der obigen Ansprüche, **dadurch gekennzeichnet, dass** das Band der Schutzschicht (12) auf die innere Schicht (11) in einer Richtung aufgewickelt ist, die darauf folgenden Wicklungen entgegengesetzt ist, welche die äußere Schicht (15) bestimmen.

5. Der mehrschichtige Schlauch gemäß einem oder mehreren der obigen Ansprüche, **dadurch gekennzeichnet, dass** die Schutzschicht (12) aus einem gummierten Faden besteht, der um die innere Schicht (11) gewickelt ist.

6. Der mehrschichtige Schlauch gemäß einem oder mehreren der obigen Ansprüche, **dadurch gekennzeichnet, dass** die Schutzschicht (12) aus einem Band aus durchgehendem gummiertem Material besteht, das um die innere Schicht (11) gewickelt ist.

7. Der mehrschichtige Schlauch gemäß einem oder mehreren der obigen Ansprüche, **dadurch gekennzeichnet, dass** die innere Schicht (11) aus einem fluorierten Polymer besteht.

## Revendications

1. Tube multicouche, comprenant successivement de l'intérieur vers l'extérieur:
- une couche interne (11) constituée par une gaine tubulaire qui définit un canal de passage pour un fluide et est ondulée au moins extérieurement, définissant ainsi des creux,
- une couche protectrice (12) pour ladite couche intérieure (11) et qui épouse sa forme ondulée, la couche protectrice étant constituée d'une bande ou d'un filament caoutchoutés enroulés sur ladite couche intérieure (11),
- une hélice (14) enroulée sur ladite couche protectrice (12) et positionnée sur un fond desdits creux,
- une couche extérieure (15) dans laquelle est noyée ladite hélice (14);
- ladite couche extérieure (15) comprenant au moins une couche en matériau élastomère (16) et au moins une couche textile de renfort (17), alternant dans son épaisseur, ladite au moins une couche en matériau élastomère (16) étant disposée complètement sur la couche protectrice (12) et l'hélice (14) et étant rectiligne, définissant ainsi un tube cylindrique.

2. Tube multicouche selon la revendication 1, **caractérisé en ce que** ladite couche protectrice (12) est constituée par une bande de tissu caoutchouté enroulée sur ladite couche intérieure (11).

3. Tube multicouche selon la revendication 1, **caractérisé en ce que** ladite couche protectrice (12) est constituée par une bande constituée d'un tissu non tissé caoutchouté enroulée sur ladite couche intérieure (11).

4. Tube multicouche selon une ou plusieurs des revendications précédentes, **caractérisé en ce que** ladite bande de ladite couche protectrice (12) est enroulée sur ladite couche intérieure (11) dans une direction inverse par rapport aux enroulements suivants qui définissent ladite couche extérieure (15).

5. Tube multicouche selon une ou plusieurs des revendications précédentes, **caractérisé en ce que** ladite couche protectrice (12) est constituée par un filament caoutchouté enroulé sur ladite couche intérieure (11).

6. Tube multicouche selon une ou plusieurs des revendications précédentes, **caractérisé en ce que** ladite couche protectrice (12) est constituée par une bande faite d'un matériau caoutchouteux continu enroulé sur ladite couche intérieure (11).

7. Tube multicouche selon une ou plusieurs des revendications précédentes, **caractérisé en ce que** ladite couche intérieure (11) est constituée d'un polymère fluoré.
